# EUROPEAN PATENT SPECIFICATION

(11) **EP 1 605 663 B1**
(45) Date of publication and mention of the grant of the patent: **01.08.2007**
(21) Application number: 05011700.1
(22) Date of filing: 31.05.2005
(51) Int. Cl.: H04L 29/08, H04L 12/58, H04L 12/18, G06Q 10/00

(54) **Method for re-establishing a session of an IMPS client in a mobile terminal**
Verfahren zum Wiederaufbau einer Sitzung in einem IMPS Client eines mobilen Terminals
Procédé pour la réouverture d'une session d'un client IMPS d'un terminal mobile

(30) Priority: 08.06.2004 US 577583 P; 22.04.2005 KR 2005033769
(43) Date of publication of application: 14.12.2005
(73) Proprietor: LG ELECTRONICS INC., Seoul (KR)
(72) Inventor: Cho, Song-Rae, Gunpo Gyunggi-Do (KR)
(74) Representative: Katérle, Axel

(56) References cited:
- WO-A-01/01244
- WIRELESS VILLAGE: "The Mobile IMPS Initiative, Client-Server Protocol, Sessions and Transactions, Version 1.1"[Online] 31 July 2002 (2002-07-31), pages 1-92, XP002343157 INTERNET Retrieved from the Internet: URL:http://www.openmobilealliance.org/tech /affiliates/wv/wvindex.html> [retrieved on 2005-09-01]
- WIRELESS VILLAGE: "The Mobile IMPS Initiative, System Architecture Model, Version 1.1"[Online] 31 July 2002 (2002-07-31), pages 1-10, XP002343158 INTERNET Retrieved from the Internet: URL:http://www.openmobilealliance.org/tech /affiliates/wv/wvindex.html> [retrieved on 2005-09-01]
- WIRELESS VILLAGE: "The Mobile IMPS Initiative, Client-Server Protocol, Static Conformance Requirement, Version 1.1"[Online] 31 July 2002 (2002-07-31), pages 1-33, XP002343159 INTERNET Retrieved from the Internet: URL:http://www.openmobilealliance.org/tech /affiliates/wv/wvindex.html> [retrieved on 2005-09-01]
- WOOD A P: "An analysis of client/server outage data" COMPUTER PERFORMANCE AND DEPENDABILITY SYMPOSIUM, 1995. PROCEEDINGS., INTERNATIONAL ERLANGEN, GERMANY 24-26 APRIL 1995, LOS ALAMITOS, CA, USA,IEEE COMPUT. SOC, 24 April 1995 (1995-04-24), pages 295-304, XP010135854 IEEE ISBN: 0-8186-7059-2

## Description

### BACKGROUND OF THE INVENTION

### 1. Field of the Invention

The present invention relates to Instant Messaging and Presence Services, and more particularly, to a method for re-establishing a session of a client in a mobile terminal which takes much time to open a session.

### 2. Description of the Background Art

IMPS (Instant Messaging and Presence Services) are new techniques with respect to a new communications device based on the Internet and are used to exchange a message and presence information between a mobile device, and a mobile communications service and an Internet-based instant messaging service. That is, two major characteristics of the IMPS services are a presence service and an instant messaging service.

The presence service provides presence of an IMPS client, user's presence and management of a list of registered users of the service. The instant messaging service allows to transmit an instant message including text, video, picture, sound or the like to a specific client or a user of another instant messaging system.

The IMPS system includes a client loaded onto a specific device and implementing an IMPS service, and a server connecting clients and sessions such that present information and an instant message are sent to a corresponding client.

After the client undergoes a series of processes in order to use an instant messaging service and establishes a session with the server, the client enters a login state. At this time, the client performs a process of requesting a login from the server and a process of acquiring its own list of contact list IDs and presence information of each contact from the server.

Every time a related art IMPS client opens a session, the IMPS client opens a session through the above-described processes and enters a login state. That is, when a session of the client is opened, if power of a device loaded with the client is turned off and then turned on, the client should open a session through the above processes and receive information about the session from the server.

In particular, when the IMPS client is loaded onto a mobile terminal, since the mobile terminal is slower than the general wired Internet in terms of data transmission speed, it takes much time for a client in a corresponding terminal to open a session and log in again if the user turns off power of the mobile terminal and then turns it on.

The combined disclosure of the following three documents discloses a mobile IMPS standard termed "Wireless Village" initiated by Ericsson, Motorola, and Nokia - Wireless Village: "The Mobile IMPS initiative, Client-Server Protocol Session and Transactions, Version 1.1", 31 July 2002, pages 1 - 92; Wireless Village: "The Mobile IMPS Initiative, System Architecture Model, Version 1.1", 31 July 2002, pages 1 - 10; and Wireless Village: "The Mobile IMPS Initiative, Client-Server Protocol, Static Conformance Requirement, Version 1.1", 31 July 2002, pages 1 - 33. In particular, a client-server framework is disclosed wherein a session established between the client and the server is identified by a session-ID and wherein, at re-login, the client may provide the old session-ID to the server, which, after validation, may accept to re-establish the old session.

IEEE publication "An Analysis of Client/Server Outage Data", appearing in Computer Performance and Dependability Symposium, 1995. Proceedings., International Erlangen, Germany 24 - 26 April, 1995, Los Alamitos, CA, USA, IEEE Comput. SOC, 24 April 1995, pages 295-304, XP010135854, IEEE ISBN: 0-8186-7095-2, examines client/server outage data and presents a list of outage courses extracted from the data. In particular, this publication discloses that, if the server and client could save the necessary client information and re-establish the session client, client downtime could be significantly reduced. An example of the client information is a "transaction ID" which may be kept by both the client and the server on disk.

WO01/01244 A1 relates to a method of managing sessions between a plurality of mobile terminals and a server. In particular, this document indicates that session state may be stored in a memory of the mobile terminal.

### SUMMARY OF THE INVENTION

Therefore, an object of the present invention is to provide a method for re-establishing a session of a client in a mobile terminal which can reduce time to re-establish a session of an IMPS client in a mobile terminal.

Another object of the present invention is to provide a method for re-establishing a session of a client in a mobile terminal which can simplify processes of re-establishing a session according to whether the IMPS client is effective or not.

To achieve these objects, there is provided a method for re-establishing a session according to claim 1. Improvements to the method are recited in the dependent claims.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
Figure 1 is a flowchart illustrating a method for re-establishing a session of an IMPS client in a mobile terminal in accordance with the present invention; and
Figure 2 is a signal flowchart illustrating one embodiment of the method for re-establishing a session of the IMPS client in the mobile terminal in accordance with the present invention.

### DETAILED DESCRIPTION OF THE PREFERRED EMBODIMENTS

Reference will now be made in detail to the preferred embodiments of a method for re-establishing a session of a client in a mobile terminal in accordance with the present invention, examples of which are illustrated in the accompanying drawings.

In the present invention, when a session of an IMPS client loaded onto a mobile terminal is opened, the IMPS client stores information of the session in a memory of the mobile terminal. Then, when power of the mobile terminal is turned off and then turned on, the IMPS client checks whether the session is effective or not. If the session is effective, the IMPS client re-establishes the session by using the information stored in the memory. At this time, the memory is a nonvolatile memory, and information of the session which is stored in the nonvolatile memory includes contact lists information, contacts information, a session ID for checking a session and the like.

Processes in which the IMPS client re-establishes the session by using the information stored in the memory are performed in such a manner that the IMPS client performs a Keep Alive transaction with the server and if it is determined that the previous session is effective, the IMPS client opens the corresponding session again and logs in again by updating presence information in the information stored in the memory.

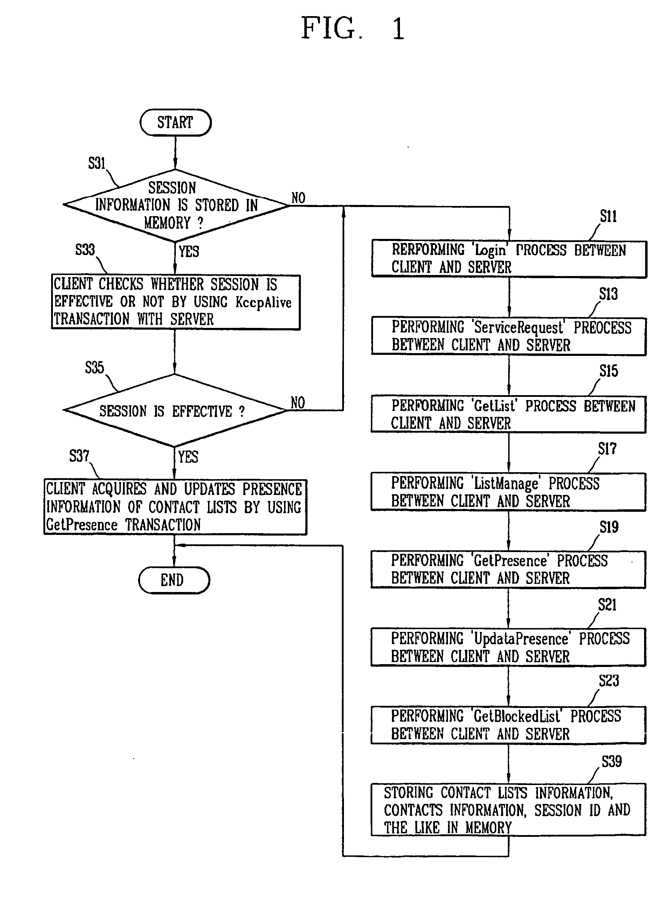

Figure 1 is a flowchart illustrating a session of an IMPS client in a mobile terminal in accordance with the present invention.

When trying an instant messaging service through a predetermined mobile terminal, an IMPS client 10 of the terminal checks whether session information is stored in a memory (S31). At this time, the session information is previous session information, and includes contact list information, contacts information, a session ID for checking a session and the like.

When the session information is stored in the memory, the IMPS client 10 checks whether a session with a server 20 is effective by performing a Keep Alive Transaction with the server 20 by using a session ID from the session information (S33). Here, the keep alive transaction includes a 'KeepAliveRequest' which the IMPS client 10 sends to the server 20 and a 'KeepAliveResponse' which the server 20 sends the IMPS client 10 in response to the 'KeepAliveRequest'.

When the session is effective (S35), the IMPS client 10 performs a Get Presence Transaction with the server 20 and updates presence information of each of members in the contact lists to thereby open the session (S37). That is, a session between the IMPS client 10 and the server 20 can be opened by only a process of determining whether the session between the IMPS client 10 and the server 20 is effective by using the session information stored in the memory of the mobile terminal and a process of updating the presence information of the contact lists stored in the memory when the session is effective.

When the session information is not stored in the memory (S31) or when the session between the IMPS client 10 and the server 20 which is checked by the Keep Alive Transaction is not effective (S35), the session is opened by undergoing a process of receiving the contacts list ID information and presence information of each contact from the server like the related art (S11 to S23). That is, the IMPS client 10 logs in to the server 20 by using a 'LoginRequest' and a 'LoginResponse' (S11), performs a 'ServiceRequest' process through a 'ServiceRequest' and a 'ServiceResponse' (S13) and acquires a list about its own contact list IDs through a 'GetListRequest' and a 'GetListResponse' (S15). Then, after receiving the contact lists, the IMPS client 10 performs a 'ListManage' process by using a 'ListManageRequest' and a 'ListManageResponse' (S17), acquires presence information from the server 20 by using a 'GetpresenceRequest' and a 'GetpresenceResponse' (S19), updates its own presence information by using an 'UpdatePresenceRequest' and an 'UpdatePresenceResponse' (S21) and then acquires a list of entities in which a message or invitation is blocked and opens a session by using a 'GetBlockedListRequest' and a 'GetBlockedListResponse'(S23).

When the session is successfully opened by the above-described processes, the IMPS client 10 stores information about the contact lists, the presence information and the session ID received through the 'LoginResponse' in the memory of the mobile terminal (S39). At this time, the memory is a nonvolatile memory in which stored information is not deleted when the power of the mobile terminal is turned off.

In the present invention, after successfully opening the session with the server, the IMPS client stores contact lists, presence information of each member in the contact lists and a session ID in the memory and deletes every session information stored in the memory when closing the session. However, when rebooting the power of the mobile terminal loaded with the IMPS client in a state that the session is opened, the IMPS client preserves session information stored in the memory and reopens the session with the server by using the session information, whereby processes for acquiring the corresponding session information can be omitted.

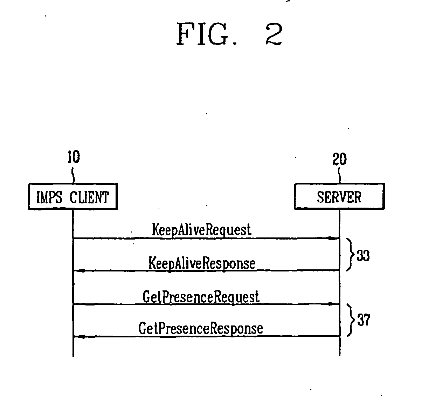

Figure 2 is a flowchart illustrating one embodiment of a method for re-establishing a session of an IMPS client in accordance with the present invention on the assumption that session information is stored in a memory of a mobile terminal and power of the mobile terminal is rebooted in a state that the session is opened.

The IMPS client 10 sends a 'KeepAliveRequest' to the server 20 by using a session ID from the session information stored in the memory in order to check effectiveness of the session with the server 20, and receives a 'KeepAliveResponse' including a response to the 'KeepAliveRequest' (S33).

If a value of the 'KeepAliveResponse' is 'successful', the session is effective. Thus, the IMPS client 10 sends a 'GetPresenceRequest' to the server 20 and receives a 'GetPresenceResponse' including presence information about the contact lists stored in the memory to thereby update the presence information of the contact lists (S37).

When the value of the 'KeepAliveResponse' is an error such as 'Session Expired' or 'Not Logged In', a power-off state of the mobile terminal is long. Thus, the server 20 considers that the IMPS client 10 is logged out from the session. At this time, since the session information stored in the memory of the mobile terminal cannot be used in session establishment, the IMPS client 10 performs processes of establishing a session in accordance with the related art as illustrated in Figure 1.

A method for re-establishing a session in accordance with the present invention will be described in detail.

When the user tries an instant messaging service with a mobile terminal which does not store session information in a memory, the IMPS client 10 loaded onto the mobile terminal establishes a session with the server 20 by performing a 'Login' process, a 'ServiceRequest' process, a 'GetList' process, a 'ListManage' process, a 'GetPresence' process, a 'UpdatePresence' process and a 'GetBlockedList' process in turn. Then, the IMPS client 10 loaded onto the mobile terminal stores a session ID, contact lists information and contacts information from the information received from the server 20 in a nonvolatile memory of the mobile terminal.

The user turns off power of the mobile terminal in a state that the session is opened in order to change a battery of the mobile terminal or something, completes the operation and then turns on the power of the mobile terminal.

When the power is turned on, the IMPS client 10 of the mobile terminal extracts the session ID from the session information stored in the memory, sends a 'KeepAliveRequest' to the server 20 and receives a 'KeepAliveResponse' from the server 20, whereby the IMPS client 10 checks whether the session is effective or not. Processes of opening a session between the IMPS client 10 and the server 20 vary according to whether the session is effective or not.

When the 'KeepAliveResponse' includes a 'successful' value, the IMPS client 10 sends a 'GetPresenceRequest' to the server 20 and receives a 'GetPresenceResponse' in response to the 'GetPresenceRequest', whereby the IMPS client 10 updates the presence information of the contact lists stored in the memory. At this time, when the 'KeepAliveResponse' includes the 'successful' value, the session before rebooting the power of the mobile terminal is still effective.

After the session between the IMPS client 10 and the server 20 is successfully opened by the process of updating the presence information, the IMPS client 10 determines whether there is session information changed by the user. If there is changed information, the IMPS client 10 updates/stores only the changed session information in the memory. At this time, the IMPS client 10 can selectively update/store only the changed session information or update/store every session information.

However, when the 'KeepAliveResponse' includes an 'error' value, the IMPS client 10 determines that the session is expired and performs all the processes of establishing a session like the related art.

The method for re-establishing a session in accordance with the present invention can be applied when the IMPS client stores session information in the memory and then reboots the power of the mobile terminal in a state that the IMPS client is not logged out from the session. When the user closes (logs out from) the session, the session information stored in the memory is deleted. Thus, in order to reopen the session after rebooting the power of the mobile terminal, all the processes of establishing a session should be performed.

In the method of re-establishing a session in accordance with the present invention, a 'Login' process, a 'ServiceRequest' process, a 'GetList' process, a

'ListManage' process, a 'GetPresence' process, a 'UpdatePresence' process and a 'GetBlockedList' process do not have to be performed.

Like this, the method of re-establishing a session of an IMPS client in a mobile terminal in accordance with the present invention can simplify processes of opening a session when the previous session is effective and reduce time for reestablishment, so that convenience of users of mobile terminals having low transmission speed can be enhanced.

In addition, the method of re-establishing a session of an IMPS client in a mobile terminal in accordance with the present invention can reduce traffic by inhibiting unnecessary data transmission and efficiently use radio resources because a session can be re-established by simplifying the processes of opening a session.

## Claims

1. A method for re-establishing a session for a client (10) loaded onto a mobile terminal, comprising:
client's opening a session with a server (20);
client's storing (S39) session information in a memory, the session information including a session ID; and
client's reopening the session with the server (20) by using the session information stored in the memory when the mobile terminal is rebooted in a state that the session is opened;
**characterized in that** the session information further includes contact lists information and contacts information of members in the contact lists.

2. The method of claim 1, further comprising:
client's deleting the session information when the session is closed.

3. The method of claim 1, wherein reopening a session comprises:
client's determining (S3) whether session information exists in the memory when the mobile terminal is rebooted;
client's determining (S33, S35) whether the session is effective when the session information exists in the memory; and
client's acquiring and updating (S37) presence information of contact lists from the server (20) when the session is effective.

4. The method of claim 3, wherein the client (10) performs processes of reopening a session which are the same as those in which the client (10) opens a session with the server (20) when the session information does not exist in the memory or when the session is not effective.

5. The method of any of the preceding claims, wherein the client (10) is an IMPS Instant Messaging and Presence Services client.

6. The method of any of the preceding claims, wherein the memory is a nonvolatile memory.

7. The method of claim 3, wherein determining (S33, S35) whether the session is effective comprises:
client's sending (33) a 'KeepAliveRequest' to the server (20); and
client's receiving (33) a 'KeepAliveResponse including whether the session is effective or not.

8. The method of claim 3, wherein updating (S37) the presence information of the contact lists comprises:
client's sending (37) a 'GetPresenceRequest' to the server (20);
client's receiving (37) 'GetPresenceResponse' including the latest presence information of the contact lists from the server (20); and
updating the presence information of the contact lists stored in the memory into the latest presence information.

9. The method of claim 3 or 4, wherein when the session information does not exist in the memory or when the session is not effective, said method further comprising:
client's logging (S11) in to the server (20);
client's acquiring (S15) contact lists from the server;
client's receiving (S17) information of members of the contact lists;
client's acquiring (S19) presence information of each of the members;
client's updating (S21) its own presence information;
client's acquiring (S23) lists in which message exchange is blocked from the server; and
client's storing (S39) the acquired session information in the memory.

## Patentansprüche

1. Verfahren zum Wiederaufbau einer Sitzung für einen auf ein mobiles Endgerät geladenen Client (10), umfassend:
Eröffnen einer Sitzung mit einem Server (20) durch den Client,
Speichern (S39) von Sitzungsinformationen in einem Speicher durch den Client, wobei die Sitzungsinformationen eine Sitzungskennung enthalten, und
Wiedereröffnen der Sitzung mit dem Server (20) durch den Client anhand der im Speicher gespeicherten Sitzungsinformationen, wenn das mobile Endgerät wieder in einen Zustand hochgefahren wird, in dem die Sitzung geöffnet ist,
**dadurch gekennzeichnet, dass** die Sitzungsinformationen ferner Kontaktlisteninformationen und Kontaktinformationen von Mitgliedern in den Kontaktlisten umfassen.

2. Verfahren nach Anspruch 1, ferner umfassend:
Löschen der Sitzungsinformationen durch den Client, wenn die Sitzung beendet wird.

3. Verfahren nach Anspruch 1, wobei das Wiedereröffnen einer Sitzung umfasst:
Ermitteln (S3) seitens des Client, ob in dem Speicher Sitzungsinformationen vorhanden sind, wenn das mobile Endgerät wieder hochgefahren wird,
Ermitteln (S33, S35) seitens des Client, ob die Sitzung in Kraft ist, wenn im Speicher Sitzungsinformationen vorhanden sind, und
Aneignen und Aktualisieren (S37) von Präsenzinformationen der Kontaktlisten von dem Server (20) durch den Client, sofern die Sitzung in Kraft ist.

4. Verfahren nach Anspruch 3, wobei der Client (10) dann, wenn im Speicher keine Sitzungsinformationen vorhanden sind oder wenn die Sitzung nicht in Kraft ist, Prozesse zur Wiedereröffnung einer Sitzung durchführt, welche die gleichen sind wie diejenigen, wenn der Client (10) eine Sitzung mit dem Server (20) eröffnet.

5. Verfahren nach einem der vorhergehenden Ansprüche, wobei der Client (10) ein IMPS-Client für Nachrichtensofortversand und Präsenzdienste ist.

6. Verfahren nach einem der vorhergehenden Ansprüche, wobei der Speicher ein nichtflüchtiger Speicher ist.

7. Verfahren nach Anspruch 3, wobei das Ermitteln (S33, S35), ob die Sitzung in Kraft ist, umfasst:
Senden (33) einer "Lasse am Leben"-Anforderung an den Server (20) seitens des Client und
Empfangen (33) einer "Lasse am Leben"-Antwort, die angibt, ob die Sitzung in Kraft ist oder nicht, seitens des Client.

8. Verfahren nach Anspruch 3, wobei das Aktualisieren (S37) der Präsenzinformationen der Kontaktlisten umfasst:
Senden (37) einer "Hole Präsenz"-Anforderung an den Server (20) seitens des Client, Empfangen (37) einer "Hole Präsenz"-Antwort mit den neuesten Präsenzinformationen der Kontaktlisten vom Server (20) durch den Client und
Aktualisieren der Präsenzinformationen der im Speicher gespeicherten Kontaktlisten auf die neuesten Präsenzinformationen.

9. Verfahren nach Anspruch 3 oder 4, wobei dann, wenn im Speicher keine Sitzungsinformationen vorhanden sind oder wenn die Sitzung nicht in Kraft ist, das Verfahren ferner umfasst:
Einloggen (S11) am Server (20) durch den Client,
Aneignen (S15) von Kontaktlisten von dem Server durch den Client,
Empfangen (S17) von Informationen über Mitglieder der Kontaktlisten durch den Client,
Aneignen (S19) von Präsenzinformationen jedes Mitglieds durch den Client,
Aktualisieren (S21) der eigenen Präsenzinformation des Client,
Aneignen (S23) von Listen, nach denen ein Nachrichtenaustausch vom Server blockiert ist, durch den Client, und
Speichern (S39) der angeeigneten Sitzungsinformationen im Speicher durch den Client.

## Revendications

1. Procédé pour rétablir une session d'un client (10) chargée sur un terminal mobile, comprenant :
l'ouverture par un client d'une session sur un serveur (20) ;
l'enregistrement (S39) par un client des informations de session dans une mémoire, les informations de session incluant une ID session ; et
la réouverture par le client de la session sur le serveur (20) à l'aide des informations de session enregistrées dans la mémoire lorsque le terminal mobile est redémarré dans un état dans lequel la session est ouverte ;
**caractérisé en ce que** les informations de session incluent en outre des informations de listes de contacts et des informations de contacts des membres des listes de contacts.

2. Procédé selon la revendication 1, comprenant en outre :
la suppression par le client des informations de session lorsque la session est fermée.

3. Procédé selon la revendication 1, dans lequel la réouverture d'une session comprend :
la détermination par le client (S3) de l'existence ou non des informations de session dans la mémoire lorsque le terminal mobile est redémarré ;
la détermination par le client (S33, S35) de l'activité ou non de la session lorsque les informations de session existent dans la mémoire ; et
l'acquisition et la mise à jour (S37) par le client des informations de présence des listes de contacts provenant du serveur (20) lorsque la session est active.

4. Procédé selon la revendication 3, dans lequel le client (10) réalise des méthodes de réouverture d'une session qui sont identiques à celles dans lesquelles le client (10) ouvre une session sur le serveur (20) lorsque les informations de session n'existent pas dans la mémoire ou lorsque la session n'est pas active.

5. Procédé selon l'une quelconque des revendications précédentes, dans lequel le client (10) est un client de Messagerie Instantanée et de Services de Présence (IMPS).

6. Procédé selon l'une quelconque des revendications précédentes, dans lequel la mémoire est une mémoire non volatile.

7. Procédé selon la revendication 3, dans lequel la détermination (S33, S35) de l'activité ou non de la session comprend :
l'envoi (33) par le client d'une requête 'KeepAliveRequest' au serveur (20) ; et
la réception (33) par le client d'une réponse 'KeepAliveResponse' indiquant si la session est active ou non.

8. Procédé selon la revendication 3, dans lequel la mise à jour (S37) des informations de présence des listes de contacts comprend :
l'envoi (37) par le client d'une requête 'GetPresenceRequest' au serveur (20) ;
la réception (37) par le client d'une réponse 'GetPresenceResponse' incluant les dernières informations de présence des listes de contacts provenant du serveur (20) ; et
la mise à jour des informations de présence des listes de contacts enregistrées dans la mémoire dans les dernières informations de présence.

9. Procédé selon la revendication 3 ou 4, dans lequel les informations de session n'existent pas dans la mémoire ou lorsque la session n'est pas active, ledit procédé comprenant en outre :
la connexion (S11) du client au serveur (20) ;
l'acquisition (S15) par le client des listes de contacts provenant du serveur ;
la réception par le client (S17) des informations des membres des listes de contacts ;
l'acquisition (S19) par le client des informations de présence de chacun des membres ;
la mise à jour (S21) par le client de ses propres informations de présence ;
l'acquisition (S23) par le client des listes dans lesquelles l'échange de messages est bloqué à partir du serveur ; et
l'enregistrement (S39) par le client des informations de session acquises dans la mémoire.
